# EUROPÄISCHE PATENTSCHRIFT

(11) **EP 1 035 309 B1**
(45) Veröffentlichungstag und Bekanntmachung des Hinweises auf die Patenterteilung: **16.01.2002**
(21) Anmeldenummer: 00112378.5
(22) Anmeldetag: 21.06.1996
(51) Int. Cl.: F02B 3/04

(54) **Verfahren zum Betreiben einer Brennkraftmaschine**
Method for operating an internal combustion engine
Procédé pour faire fontionner un moteur à combustion interne

(30) Priorität: 27.07.1995 DE 19527550
(43) Veröffentlichungstag der Anmeldung: 13.09.2000
(62) Teilanmeldung aus: 98101758.5
(73) Patentinhaber: Ficht GmbH & Co. KG, 85610 Kirchseeon (DE)
(72) Erfinder: Hellmich, Wolfram, 81829 München (DE)
(74) Vertreter: Patentanwälte Dr. Solf & Zapf

(56) Entgegenhaltungen:
- DE-A- 3 920 089
- DE-A- 4 020 470
- DE-A- 4 206 817
- US-A- 5 163 396
- PATENT ABSTRACTS OF JAPAN vol. 011, no. 372 (M-648), 4. Dezember 1987 (1987-12-04) & JP 62 147012 A (MITSUBISHI HEAVY IND LTD;OTHERS: 01), 1. Juli 1987 (1987-07-01)
- PATENT ABSTRACTS OF JAPAN vol. 1995, no. 06, 31. Juli 1995 (1995-07-31) & JP 07 063061 A (MAZDA MOTOR CORP), 7. März 1995 (1995-03-07)

## Beschreibung

Die Erfindung betrifft ein Verfahren zum Betreiben einer Brennkraftmaschine.

Dieses Verfahren wird bei Zweitakt-Brennkraftmaschinen mit Direkteinspritzung angewandt.

Die DE 40 20 470 A1 zeigt eine bekannte Verbrennungskammer einer Brennkraftmaschine, die einen Einspritzer zur Direkteinspritzung von Kraftstoff in die Verbrennungskammer hat. Ein exzentrischer Hohlraum mit einer bogenförmigen Ausnehmung ist in einer Decke der Verbrennungskammer ausgebildet und der Einspritzer ist an einem oberen Ende des Hohlraums auf der Achse des Maschinenzylinders angeordnet. Eine Zündkerze ist auf dieser Achse so angeordnet, daß sie den vom Einspritzer eingespritzten und ihren Elektrodenspalt passierenden Kraftstoff zündet. Dabei sind der Einspritzer und der Elektrodenabstand der Zündkerze längs der Zylinderachse in einem vorbestimmten Abstand angeordnet, um eine Schichtladung zu erzielen. Der Kraftstoff wird im Schichtverbrennungsmodus in wirksamer Weise verbrannt.

Gemäß der EP 0 463 613 A1 ist eine weitere Brennkraftmaschine mit einem Brennraum bekannt, der durch einen Zylinder, einen Zylinderkopf und einen Kolbenboden abgegrenzt ist. Im Zylinderkopf ist ein Einlaß- und ein Auslaßventil angeordnet. Am Randbereich des Zylinderkopfes mündet unmittelbar neben dem Einlaßventil eine Einspritzdüse in den Brennraum, die Kraftstoff seitlich in den Brennraum einspritzen kann. In einem mittigen Bereich des Zylinderkopfes ist eine Zündkerze angeordnet, die mit ihren Zündelektroden in den Brennraum ragt. Der Kolbenboden ist im Bereich zwischen der Zündkerze und der Einspritzdüse mit einer zweigeteilten Ausnehmung versehen. Ein Teil der Ausnehmung befindet sich direkt unterhalb der Zündkerze. Der andere Teil der Ausnehmung erstreckt sich in Form einer wannenförmigen Kavität bis hin zur Einspritzdüse.

Wird diese Brennkraftmaschine mit geringer Last betrieben, so wird eine kleine Brennstoffmenge seitlich in die Ausnehmung des Kolbenbodens eingespritzt, wobei der eingespritzte Kraftstoff entlang der wannenförmigen, sphärischen Ausnehmung bis hin zum Teil der um die Zündkerze herum angeordneten Ausnehmung geleitet wird. Diese Bewegung des eingespritzten Kraftstoffs zur Region unterhalb der Zündkerze wird durch die im Brennraum herrschende Wirbelbewegung X unterstützt (vgl. EP 0 463 613 A1, Spalte 10, Zeile 15 bis 39, Fig. 8C).

Bei höherer Last wird eine erste Kraftstoffmenge eingespritzt, kurz nachdem der Kolben den unteren Totpunkt UT erreicht hat. Die erste Kraftstoffmenge wird mit der angesaugten Luft zu einem mageren Kraftstoff/Luft-Gemisch gemischt. Eine zweite Kraftstoffmenge wird eingespritzt, wenn sich der Kolben etwa auf halber Höhe zwischen dem oberen und unteren Totpunkt befindet, so daß der Kraftstoff etwa senkrecht auf die Senke auftrifft und sich nur ein kleiner Teil davon in der Ausnehmung sammelt. Hierdurch wird das vorab abgespritzte Kraftstoff/Luft-Gemisch im Bereich der Ausnehmung zu einem zündfähigen Gemisch angereichert, das durch die Zündkerze gezündet werden kann.

Diese Brennkraftmaschine arbeitet somit bei hoher Last nach dem sogenannten Ladungs-Schichtungsprinzip, nach dem im Brennraum unterschiedliche Bereiche mit unterschiedlich fettem Kraftstoff/Luft-Gemischen ausgebildet sind, wobei der Bereich um die Zündkerze vorzugsweise fetter und damit zündfähiger als die übrigen Bereiche ist. Die Ladungsschichtung durch Doppeleinspritzung dient vor allem zum Betreiben von Magermotoren.

Das Betreiben von Brennkraftmaschinen mit Ladungsschichtung, insbesondere von Zweitaktbrennkraftmaschinen, war bisher problematisch, da bekannte Einspritzverfahren sehr aufwendig sind und zudem keine befriedigenden Laufeigenschaften beim Übergang vom Betrieb mit Ladungsschichtung (bei Leerlauf und Teillast) zum Betrieb mit homogener Gemischaufbereitung erreicht werden konnten.

Der Erfindung liegt die Aufgabe zugrunde, ein Verfahren zum Betreiben einer Brennkraftmaschine mittels Ladungsschichtung zu erhalten, bei dem eine Ladungsschichtung effektiv und auf einfache Art und Weise herbeigeführt werden kann und das insbesondere bei kleinsten als auch bei mittleren Motorlasten sehr gute Laufeigenschaften aufweist.

Diese Aufgabe wird durch ein Verfahren mit den Merkmalen des Anspruchs 1 gelöst.

Damit ist es möglich, auf einfache Weise eine Ladungsschichtung im Leerlauf und Teillastbereich zu erhalten, mit der eine sehr hohe Laufruhe in diesen Betriebszuständen erreicht wird.

In einer besonders vorteilhaften Ausführung des Verfahrens wird der Kraftstoff unter hohem Einspritzdruck, bevorzugt > 40 bar eingespritzt.

Nachfolgend wird die Erfindung anhand der Zeichnung beispielhaft erläutert. Es zeigen:
- Fig. 1: schematisch einen Querschnitt eines Zylinders einer Brennkraftmaschine mit Zünd- und Einspritzeinrichtungen, die nicht nach der Erfindung ausgebildet ist.
- Fig. 2: den Zusammenhang zwischen der Drehzahl [U/min] und der Kurbelwellenumlaufzeit [s] in einem Diagramm,
- Fig. 3: schematisch eine nach dem Energiespeicherprinzip arbeitende Einspritzvorrichtung,
- Fig. 4: einen Querschnitt durch einen Zylinderkopf und einen oberen Bereich eines Kolbens, die für eine Direkteinspritzung und eine Direktzündung des Kraftstoffs ausgebildet sind,

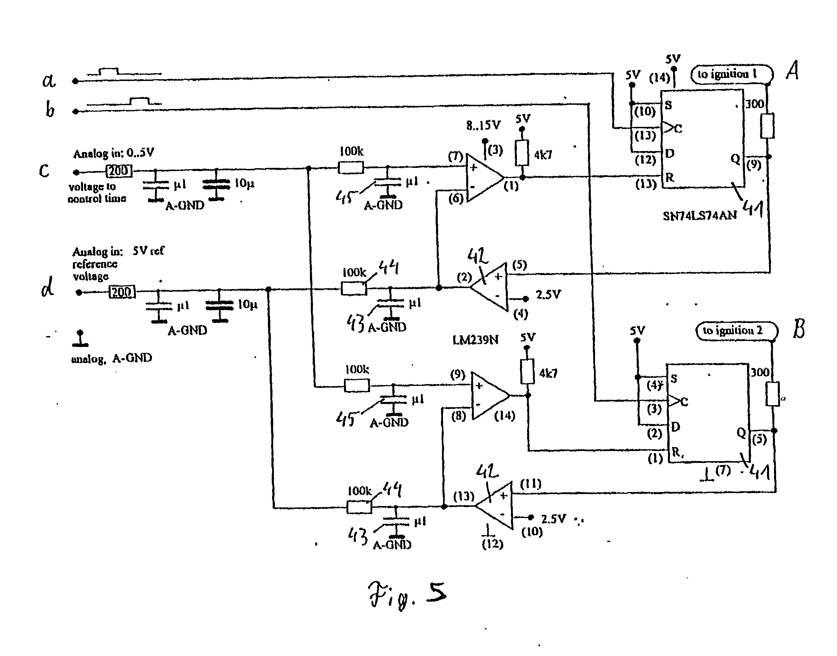

- Fig. 5: eine Schaltung, die als Timerelement zum Messen der vorbestimmten Verzögerungszeit verwendet wird.

Das Verfahren wurde an einer Zweitakt-Brennkraftmaschine mit zwei Zylindern angewandt. Der Hubraum dieser Brennkraftmaschine beträgt 380 cm³ und die Leistung 60 PS bei 6 500 U/min.

Als Einspritzvorrichtung wird eine nach dem Festkörper-Energiespeicherprinzip arbeitende Einspritzung verwendet (PDS-Einspritzvorrichtung), wie sie beispielsweise in den deutschen Patentanmeldungen P 195 15 781 bzw. P 195 15 782 beschrieben ist.

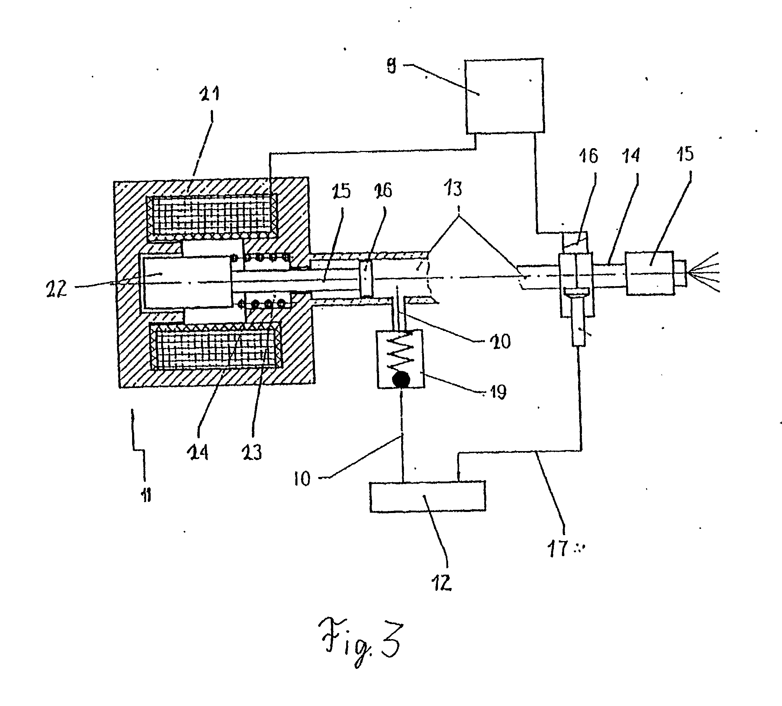

Schematisch ist das Grundprinzip einer nach dem Energiespeicherprinzip arbeitenden Einspritzvorrichtung in Fig. 3 dargestellt. Diese Kraftstoff-Einspritzvorrichtung basiert auf einer Kolbenpumpe 11 mit elektromagnetischem Antrieb zum Ansaugen von Kraftstoff aus einem Vorratsbehälter 12 sowie zum Beschleunigen des angesaugten Kraftstoffes in einer Schwungleitung 13, die über eine Druckleitung 14 an eine Einspritzdüse 15 angeschlossen ist. Ferner ist in einem Abzweig zwischen der Schwungleitung 13 und der Druckleitung 14 ein Absperrventil 16 angeordnet, das als elektromagnetisches Ventil ausgeführt ist und den Kraftstoffdurchgang zu einer Rücklaufleitung 17 steuert, die an das Absperrventil 16 angeschlossen ist und in den Vorratsbehälter 12 mündet. Die Ansteuerung des Absperrventils 16 sowie der Kolbenpumpe 11 erfolgt über die gemeinsame elektronische Steuereinrichtung 9, die an die Erregerspule des als Magnetventil ausgeführten Absperrventils 16 sowie an eine Spule des Antriebselektromagneten der Kolbenpumpe 11 angeschlossen ist. Ferner ist ein Rückschlagventil 19 in einer Ansaugleitung 20 angeordnet, die das pumpenseitige Ende der Schwungleitung 13 mit dem Vorratsbehälter 12 verbindet.

Die Kolbenpumpe 11 umfaßt eine Magnetspule 21 mit einem im Spulendurchgang angeordneten Anker 22, der als zylindrischer Körper, beispielsweise als Vollkörper, ausgebildet ist und in einer Gehäusebohrung 23 geführt ist, die sich parallel zur Zentrallängsachse der Magnetspule 21 erstreckt und mittels einer Druckfeder 24 in eine Ruhestellung vorgespannt ist, in welcher er in Fig. 3 am linken Ende der Gehäusebohrung 23 mit seiner hinteren Stirnwand anliegt. Die andere Stirnwand des Ankers 22 ist von der Feder 24 beaufschlagt, die sich am rechten Ende der Bohrung 23 an der Gehäusewandung der Pumpe 11 abstützt. Die federbeaufschlagte Stirnseite des Ankers 22 ist fest mit einer Kolbenstange 25 verbunden, an derem freien Ende ein Kolben 26, der Förderkolben der Pumpe 11, befestigt ist, der an der Innenwand der Schwungleitung 13 geführt ist und bevorzugt gegenüber dieser Wandung abgedichtet ist. Die Kolbenstange 25 durchsetzt eine Bohrung im Pumpengehäuse, deren Durchmesser geringer ist als der Durchmesser der den Anker 22 führenden Bohrung.

Die Ansaugleitung 20 mündet vor der außen gelegenen Stirnfläche des Förderkolbens 26 in die Schwungleitung 13. Das Rückschlagventil 19 in der Förderleitung 20 umfaßt beispielsweise als Ventilelement eine federvorgespannte Kugel, wobei Kugel und Feder so angeordnet sind, daß das kugelförmige Ventilelement im Rückschlagventil angehoben wird, wenn der Förderkolben 26 zum Ansaugen von Kraftstoff an dem Behälter 12 seinen Saughub durchführt, also dann, wenn der Kolben 26 in Fig. 3 eine Hubbewegung nach links ausführt, was dann der Fall ist, wenn der Magnet 21 entregt ist und der Anker 22 in seine Ruhestellung durch die Feder 24 überführt wird. Im anderen Falle, nämlich beim Förderhub des Kolbens 26, entsprechend einer Kolbenbewegung in Fig. 3 nach rechts bei erregtem Elektromagnet 21, wird das Ventilelement des Rückschlagventils 20 in seine Sperrstellung überführt, so daß die Verbindung der Schwungleitung 13 zum Vorratsbehälter 12 unterbrochen ist. Durch den Förderhub des Kolbens 26 wird die Masse des in der Schwungleitung 13 befindlichen Kraftstoffes beschleunigt und während einer durch die Steuereinrichtung 18 vorgegebenen Öffnungszeitdauer des Absperrventils 16 in die Rücklaufleitung 17 und über diese in den Behälter 12 überführt. Während dieses Zeitraums erfolgt also in erster Linie eine Beschleunigung des Kraftstoffes in der Leitung 13 und 17, und der Kraftstoffdruck ist dabei so gering, daß die in an sich bekannter Weise, beispielsweise hydraulisch, blockierte Düse 15 einen Sperrzustand einnimmt, in welchem über die Düse kein Kraftstoff auszutreten vermag.

Wenn die Kraftstoffmenge in der Schwungleitung 13 (und der Rücklaufleitung 7) einen durch die Steuereinrichtung 18 in Abhängigkeit von aktuellen Motorbetriebsbedingungen vorgegebenen Beschleunigungswert erreicht hat, wird ebenfalls unter Steuerung der Einrichtung 18 das Absperrventil geschlossen, wodurch die kinetische Energie des in den Leitungen 13 und 14 strömenden Kraftstoffes schlagartig in eine Druckstoßenergie umgewandelt wird, deren Wert so hoch ist, daß der Schließwiderstand der Düse 15 überwunden und Kraftstoff über die Düse 15 abgespritzt wird. Diese Kraftstoff-Einspritzvorrichtung ermöglicht einen diskontinuierlichen Betrieb der Kolbenpumpe, die im Zusammenhang mit dem elektromagnetisch betätigten Absperrventil 6 eine präzise Steuerung des Einspritzvorgangs erlaubt.

Diese nach dem Energiespeicherprinzip arbeitenden Einspritzvorrichtungen zeichnen sich durch Einspritzdrücke ≥ 40 bar aus, die vorzugsweise in einem Bereich um 60 bar liegen. Bei einem Einspritzdruck im Bereich von 60 bar wird mit herkömmlichen Einspritzdüsen eine Kraftstoff-Einspritzgeschwindigkeit von etwa 50 m/s erzielt. Die hohen Einspritzdrücke werden impulsförmig erzeugt, wobei durch die Dauer der Einspritzimpulse die pro Einspritzvorgang injizierte Kraftstoffmenge gesteuert wird.

Bei dem Verfahren wird zuerst der Zeitpunkt für das Auslösen bzw. den Beginn des Einspritzvorganges bestimmt. Dies kann in bekannter Art und Weise durch Messen einer vorbestimmten Winkelstellung der Kurbelwelle erfolgen. Wird die vorbestimmte Winkelstellung festgestellt, so wird der Einspritzvorgang ausgelöst und gleichzeitig ein Timerelement gestartet, das nach einer vorbestimmten Zeitdauer bzw. einer vorbestimmten Verzögerungszeit ein Signal zum Zünden des Kraftstoff/Luft-Gemisches im Brennraum abgibt.

Während das Timerelement die vorbestimmte Verzögerungszeit mißt, laufen in der Kraftstoff-Einspritzvorrichtung folgende Vorgänge ab:
1. Erregung der Magnetspule 21
2. Beschleunigung des Ankers 22 und des in der Schwungleitung 13 enthaltenen Kraftstoffs,
3. Übertragung der gespeicherten Energie auf den in der Druckleitung 14 befindlichen Kraftstoff,
4. Abspritzung von Kraftstoff in den Brennraum 4, wenn der Schließwiderstand der Düse 15 überwunden ist,
5. Zerstäubung und Verwirbelung des eingespritzten Kraftstoffs im Brennraum 4.

Diese beim Einspritzvorgang ablaufenden Vorgänge sind zeitkonstant, d.h., die Zeitdauer ist vorbestimmt bzw. hängt von wenigen Parametern ab, wie z.B. der pro Einspritzvorgang eingespritzten Kraftstoffmenge, so daß zum Zeitpunkt des Auslösens des Einspritzvorganges feststeht, wann der in den Brennraum 4 eingespritzte Kraftstoff sich im Idealzustand für eine Zündung befindet.

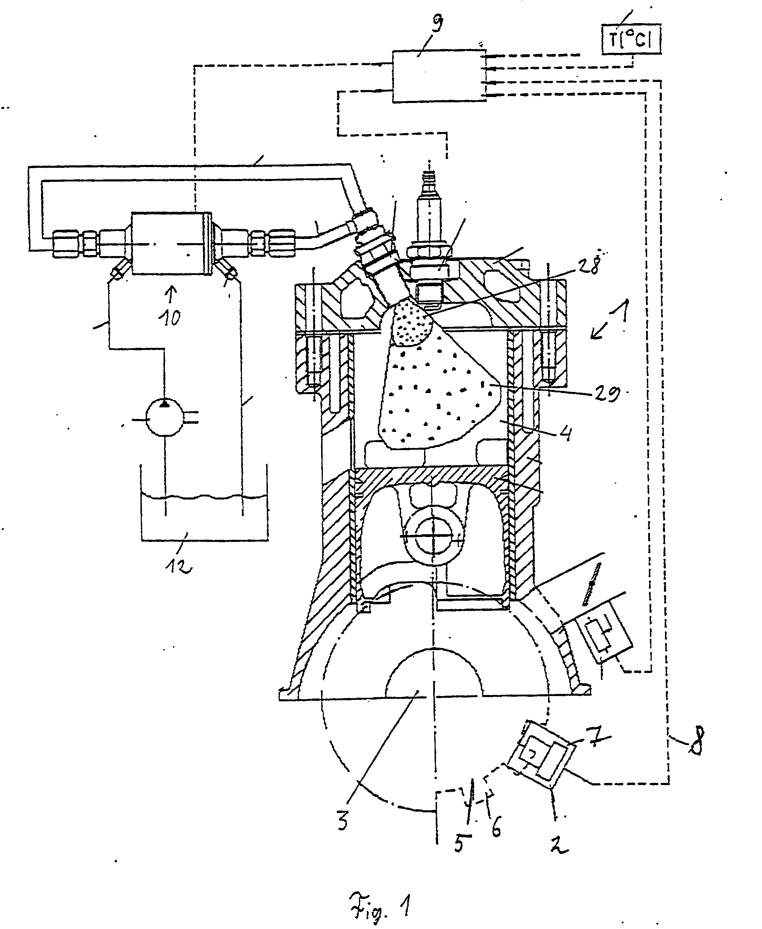

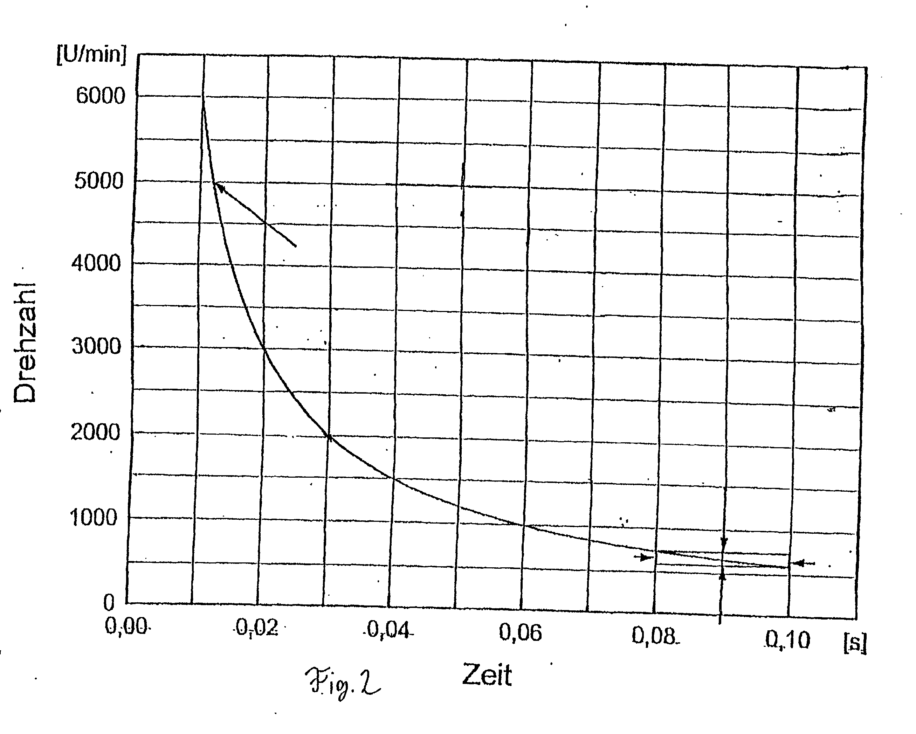

In Fig. 1 ist eine kleine Kraftstoffwolke 28 für den Leerlaufbetrieb und eine große Kraftstoffwolke 29 für den Lastbetrieb dargestellt. Der ideale Zündzeitpunkt hängt davon ab, wie sich die gesamte Kraftstoffwolke im Brennraum 4 verteilt und ob sich im Bereich einer Zündkerze 30 ein für die Zündung ausreichend fettes Kraftstoff/Luft-Gemisch angereichert hat. Die Erfinder haben festgestellt, daß sich der Zeitpunkt für eine ideale Zündung, insbesondere im Leerlaufbetrieb, zu einer vorbestimmten, nur von wenigen Parametern abhängigen Verzögerungszeit bezüglich des Beginns des Einspritzvorgangs einstellt.

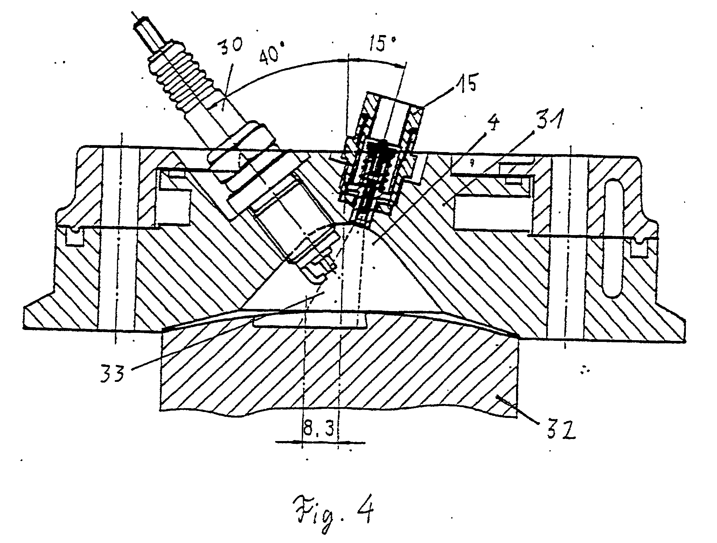

Die Zweitakt-Brennkraftmaschine, bei der das Verfahren angewandt wurde, ist für eine Direkteinspritzung mit Zylinderköpfen 31 und Kolben 32 ausgestattet worden, wie in Fig. 4 dargestellt.

In der Fig. 4 ist der Kolben 32 am oberen Totpunkt dargestellt, so daß zwischen den Kolben 32 und dem Zylinderkopf 31 jeweils ein domförmiger Brennraum 4 ausgebildet ist. In diesem Brennraum 4 wird mit der Einspritzdüse 15 der Kraftstoff eingespritzt, der im Brennraum 4 einen Einspritzkegel 33 bildet.

Bei der Ausführungsform gemäß Fig. 4 berührt die Zündkerze 30 den Einspritzkegel 33, so daß der eingespritzte Kraftstoffstrahl direkt gezündet werden kann. Bei dieser Ausführungsform erfolgt somit sowohl eine Direkteinspritzung als auch eine Direktzündung, da der unmittelbar eingespritzte Kraftstoffstrahl von der Zündkerze 30 gezündet wird.

Diese Ausführungsformen eignet sich für die zeitverzögerte Zündung.

Bei der Ausführungsform mit der Direktzündung liegt die vorbestimmte Zeitdauer der Verzögerungszeit im Bereich zwischen 0,5 Millisekunden und 1 Millisekunde und nimmt im Normalbetrieb vorzugsweise einen Wert von 0,7 Millisekunden ein. Die Verzögerungszeit wird hierbei vorzugsweise in Abhängigkeit der Temperatur der Brennkraftmaschine variiert, wobei die Temperatur am Zylinderkopf 31 gemessen wird. Bei einem Kaltstart wird die Verzögerungszeit auf etwa 0,5 Millisekunden und bei heißem Zylinderkopf 31 auf 1 Millisekunde eingestellt. Weitere Parameter für die Einstellung der Verzögerungszeit zwischen dem Beginn des Einspritzvorganges und dem Zündzeitpunkt werden nicht berücksichtigt. Eine solche Steuerung des Zündzeitpunktes kann auf einfache Art und Weise und mit geringem Rechenaufwand erfolgen, da die geeignete Verzögerungszeit nur in Abhängigkeit eines einzigen Parameters, der Zylinderkopftemperatur, ermittelt wird.

Mit dieser Ausführungsform wurde ein sensationeller Gleichlauf im Leerlaufbetrieb erzielt, so daß selbst bei einer Drehzahl von 180 U/min ein ruhiger Leerlauf der Zweitakt-Brennkraftmaschine erfolgte. Diese untere Drehzahlgrenze von 180 U/min war lediglich durch die bei den Testversuchen verwendete Steuereinrichtung vorgegeben, da sie keine langsameren Drehzahlen berechnen kann.

Ein Leerlaufbetrieb bei einer Drehzahl von 180 U/min bedeutet eine deutliche Kraftstoffeinsparung gegenüber üblichen Leerlaufdrehzahlen, die ein Vielfaches der hier erreichten Leerlaufdrehzahl betragen.

Eine solche konstante Verzögerungszeit kann mit sehr einfachen technischen Mitteln realisiert werden, wobei hierzu die Verwendung eines Mikroprozessors nicht notwendig ist.

Das Timerelement kann sowohl als digitaler Timer als auch als einfache Hardware-Schaltung (Fig. 6) realisiert werden.

Die Hardware-Schaltung ist für eine Zweizylinder-Brennkraftmaschine ausgebildet mit jeweils einem Eingang a, b, an dem das Trigger- bzw. Steuersignal für den Einspritzvorgang angelegt wird. An einem weiteren Eingang c wird eine Steuerspannung angelegt, die die Verzögerungszeit festlegt. Bei einer konstanten Verzögerungszeit kann die Steuerspannung an einem Potentiometer abgegriffen werden, und bei einer sich variierenden Verzögerungszeit wird die Steuerspannung von der Steuereinrichtung geliefert.

Eine positive Anstiegsflanke eines der an a, b anliegenden Triggersignale schaltet einen Flip-Flop 41, wodurch der Ausgang Q des Flip-Flops auf Spannung geschaltet wird. Hierdurch wird der Ausgang eines Komparators 42 geöffnet, so daß ein Kondensator 43 über einen Widerstand 44 geladen wird. Die am Kondensator 43 anliegende Spannung wird mit einer an einem entsprechenden Kondensator 45 anliegenden Steuerspannung verglichen. Sind die Spannungen gleich groß, wird das Flip-Flop 41 zurückgesetzt, wodurch an A, B ein Steuersignal für die Zündung abgegeben wird.

Das Verfahren zum Steuern des Zündzeitpunktes läßt sich auch mit einem herkömmlichen Verfahren zum Steuern des Zündzeitpunktes kombinieren, bei dem der Zündzeitpunkt in Abhängigkeit einer vorbestimmten Winkelstellung der Kurbelwelle bestimmt wird. Hierbei wird das Verfahren vorzugsweise unterhalb einer Last- oder Drehzahlschwelle und das herkömmliche Verfahren oberhalb dieser Schwelle angewandt. Eine solche Drehzahlschwelle liegt etwa im Bereich von 2 000 bis 4 000 U/min.

Zusammenfassend wird festgestellt, daß mit dem Verfahren der zeitverzögerten Zündung es möglich ist, mit einfachen technischen Mitteln den Zündzeitpunkt zu ermitteln, wobei eine hervorragende Laufruhe, insbesondere im Leerlaufbetrieb, erzielt wird.

## Patentansprüche

1. Verfahren zum Betreiben einer 2-Takt-Brennkraftmaschine, insbesondere im Leerlaufbetrieb, wobei die Brennkraftmaschine zumindest einen Zylinder aufweist, im Zylinder ein Kolben (32) beweglich angeordnet ist, in dessen Kolbenboden eine Kolbenmulde vorgesehen ist, der Zylinder durch einen Zylinderkopf (31) abgeschlossen ist, in dem ein domförmiger Brennraum (4) ausgebildet ist, in den eine Einspritzeinrichtung mit einer Einspritzdüse (15) und eine Zündkerze (30) münden, wobei der Kraftstoff in Form eines Einspritzkegels (33) direkt in den Brennraum (4) auf den Boden der Kolbenmulde gespritzt wird, wenn sich der Kolben (32) am oberen Totpunkt befindet,
**dadurch gekennzeichnet, daß**
a) eine nach dem Energiespeicherprinzip, insbesondere nach dem Festkörperenergiespeicherprinzip arbeitende Einspritzeinrichtung verwendet wird,
b) der Kraftstoff mit einem dezentral schräg in den Brennraum (4) gerichteten Einspritzkegel (33) in eine dezentral angeordnete Kolbenmulde eingespritzt wird und
c) der Kraftstoff mit einer den Einspritzkegel (33) im Brennraum (4) berührenden Zündkerze (30) direkt gezündet wird.

2. Verfahren nach Anspruch 1,
**dadurch gekennzeichnet, daß**
der Kraftstoff mit Einspritzdrücken über 40 bar in den Brennraum (4) eingespritzt wird.

3. Verfahren nach Anspruch 1, und/oder 2,
**dadurch gekennzeichnet, daß**
der Einspritzkegel (33) unter einem Winkel von 15° zur Längsmittelachse des Kolbens (32) eingespritzt wird.

4. Verfahren nach einem oder mehreren der Ansprüche 1 bis 3,
**dadurch gekennzeichnet, daß**
für die Zündkerze (30) eine Einbaulage gewählt wird, bei der die Längsmittelachse der Zündkerze (30) mit der Längsmittelachse des Kolbens (32) einen Winkel von 40° und mit der Längsmittelachse des Einspritzkegels (33) einen Winkel von 55° einschließt.

## Claims

1. Method for operating a 2-stroke internal combustion engine, especially in the idling mode, the internal combustion engine having at least one cylinder, the cylinder having arranged in it in a moveable manner a piston (32), in the piston crown of which a piston recess is provided, the cylinder being closed off by a cylinder head (31), in which a dome-shaped combustion chamber (4) is formed, into which an injection device with an injection nozzle (15) and a spark plug (30) open, the fuel being sprayed directly into the combustion chamber (4) in the form of an injection cone (33) onto the base of the piston recess when the piston (32) is at top dead centre, **characterized in that**
a) an injection device that operates on the energy storage principle, in particular the solid-body energy storage principle, is used,
b) the fuel is injected into a noncentral piston recess in an injection cone (33) directed noncentrally and obliquely into the combustion chamber (4), and
c) the fuel is ignited directly by means of a spark plug (30) that touches the injection cone (33) in the combustion chamber (4).

2. Method according to Claim 1, **characterized in that** the fuel is injected into the combustion chamber (4) at an injection pressure above 40 bar.

3. Method according to Claim 1 and/or 2, **characterized in that** the injection cone (33) is injected at an angle of 15° to the longitudinal centre line of the piston (32).

4. Method according to one or more of Claims 1 to 3, **characterized in that** the installation position chosen for the spark plug (30) is one in which the longitudinal centre line of the spark plug (30) encloses an angle of 40° with the longitudinal centre line of the piston (32) and an angle of 55° with the longitudinal centre line of the injection cone (33).

## Revendications

1. Procédé pour faire fonctionner un moteur deux temps à combustion interne, spécialement au point mort, le moteur à combustion interne présentant au moins un cylindre, dans lequel est disposé de manière mobile un piston (32), dont le fond est muni d'une dépression, le cylindre étant fermé par une culasse (31) dans laquelle une chambre de combustion (4) en forme de dôme est formée, dans laquelle débouchent un dispositif d'injection avec une buse d'injection (15) et une bougie d'allumage (30), le carburant étant injecté sous forme d'un cône d'injection (33) directement dans la chambre de combustion (4) sur le fond de la dépression du piston lorsque ledit piston (32) se trouve au point mort supérieur, **caractérisé en ce que**
a) un dispositif d'injection fonctionnant suivant le principe d'accumulation d'énergie, en particulier suivant le principe d'accumulation d'énergie de corps solide, est utilisé,
b) le carburant est injecté avec un cône d'injection (33) orienté en biais de manière excentrée dans la chambre de combustion (4), dans une dépression du piston disposée de manière excentrée et **en ce que**
c) le carburant est allumé directement avec une bougie d'allumage (30) touchant le cône d'injection (33) dans la chambre de combustion (4).

2. Procédé suivant la revendication 1, **caractérisé en ce que** le carburant est injecté dans la chambre de combustion (4) à une pression d'injection supérieure à 40 bars.

3. Procédé suivant la revendication 1 et/ou 2, **caractérisé en ce que** le cône d'injection (33) est injecté sous un angle de 15° par rapport à l'axe médian longitudinal du piston (32).

4. Procédé suivant l'une ou plusieurs des revendications 1 à 3, **caractérisé en ce que** la position de montage de la bougie d'allumage (30) est choisie dé manière que l'axe médian longitudinal de ladite bougie d'allumage (30) forme un angle de 40° avec l'axe médian longitudinal du piston (32) et un angle de 55° avec l'axe médian longitudinal du cône d'injection (33).
